# EUROPEAN PATENT SPECIFICATION

(11) **EP 4 098 100 B1**
(45) Date of publication and mention of the grant of the patent: **18.09.2024**
(21) Application number: 22171171.6
(22) Date of filing: 02.05.2022
(51) Int. Cl.: A01D 34/84, A01G 3/06

(54) **POWER TOOL**
ELEKTROWERKZEUG
OUTIL ÉLECTRIQUE

(30) Priority: 10.05.2021 US 202117316482
(43) Date of publication of application: 07.12.2022
(73) Proprietor: Techtronic Cordless GP, Anderson, SC 29621 (US)
(72) Inventor: SMITH, Joshua A., Greenville, 29609 (US); BOYLES, Tyler, Liberty, 29657 (US)
(74) Representative: Novagraaf Group

(56) References cited:
- US-A- 4 645 011
- US-A- 4 962 631
- US-A- 5 119 879

## Description

### FIELD

The present disclosure relates generally to power tools, and more particularly to edgers, and more particularly to a power tool according to the preamble of claim 1.

### BACKGROUND

Power tools are generally utilized to perform operations such as yardwork, gardening, and the like. While power tools can make manual operations more efficient and easier to perform, they require safety controls and adjustability to adapt to different operational environments while keeping the operator safe from harm. Document US 4 962 631 A provides an edger wherein a cutter device is arranged on one side of an edger frame, the position of a front wheel is adjustable, the position of one of the rear wheels situated on the other side of the edger frame is also adjustable, and a mechanism for changing the position of the front wheel as well as changing the position of the rear wheel is performed by a single control lever at the operator's station. With this arrangement, the adjustment of the depth of the cutter and the adjustment for maintaining the edger in a horizontal condition when the edger is driven on a curbstone can be easily effected by the operator.

Powered edgers, for example, are significantly more efficient at edging yards and other environments as compared to traditional manual labor. However, because of their relative size, they may be cumbersome in certain environments and when operated under certain conditions. Moreover, rotating edging blades are typically exposed and create danger to the operator.

Accordingly, improved power tools are desired in the art. In particular, power tools which provide flexibility and increased safety would be advantageous.

### BRIEF DESCRIPTION

Aspects and advantages of the invention in accordance with the present disclosure will be set forth in part in the following description, or may be obvious from the description, or may be learned through practice of the technology.

The invention provides a power tool according to claim 1. The power tool includes a drop wheel moveable in a vertical direction about a pivot axis; a spring rotatably biasing the drop wheel about the pivot axis; a stop mechanism defining a plurality of stop positions each corresponding with a different relative position of the drop wheel; and a user interface configured to selectively disengage the stop mechanism to permit the drop wheel to rotate about the pivot axis until the stop wheel contacts an underlying surface below the power tool, wherein the user interface is disposed at a handle of the power tool.

In accordance with an embodiment, a power tool is provided. The power tool includes a housing; a plurality of wheels coupled to the housing; a blade rotatable about a rotational axis; a boom extending from the housing, wherein the boom is pivotally mounted to the housing, and wherein the boom defines a longitudinal axis; and a handle rotatably coupled to the boom and configured to rotate about the longitudinal axis between a first position and a second position.

In accordance with another embodiment, an edger is provided. The edger includes a housing; a plurality of wheels coupled to the housing, the plurality of wheels comprising: a drop wheel selectively moveable in a vertical direction about a pivot axis, the drop wheel disposed on a first side of the housing; and a height-adjustable wheel moveable in the vertical direction about a pivot axis, the height-adjustable wheel disposed on a second side of the housing opposite the first side, wherein the height adjustable wheel is configured to set a height of a rotatable blade of the edger; a boom extending from the housing, wherein the boom is pivotally mounted to the housing, and wherein the boom defines a longitudinal axis; and a handle rotatably coupled to the boom and configured to rotate about the longitudinal axis between a first position and a second position.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1 is a perspective view of a power tool in accordance with the present invention;
FIG. 2 is a perspective view of a power tool in accordance with the present invention;
FIG. 3 is a partial perspective view of a power tool in accordance with the present invention;
FIG. 4 is a partially cut away perspective view of a power tool in accordance with embodiments of the present disclosure;
FIG. 5 is a partial side view of a height-adjustment wheel of a power tool in accordance with embodiments of the present disclosure;
FIG. 6 is a partial perspective view of the height-adjustment wheel of the power tool in accordance with embodiments of the present disclosure;
FIG. 7 is a partial side view of a drop wheel of a power tool in accordance with the present invention;
FIG. 8 is a partial perspective view of the drop wheel of the power tool in accordance with the present invention;
FIG. 9 is a partial side view of the power tool in accordance with embodiments of the present disclosure;
FIG. 10 is a perspective view of the power tool with a handle of the power tool in a horizontal orientation in accordance with embodiments of the present disclosure;
FIG. 11 is a perspective view of the power tool with the handle in a vertical orientation in accordance with embodiments of the present disclosure;
FIG. 12 is a rear view of the handle of the power tool in accordance with embodiments of the present disclosure; and
FIG. 13 is a schematic view of a power tool disposed in an environment in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope of the claims. For instance, features illustrated or described as part of one embodiment can be used with another embodiment to yield a still further embodiment. Thus, it is intended that the present disclosure covers such modifications and variations as come within the scope of the appended claims. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments.

In general, power tools described herein are configured to be easily adjustable and used within a wide range of operational environments without exposing the operator to unnecessary harm. In a non-limiting embodiment, the power tool is an edger having an edging blade. The edger can include a drop wheel and a height-adjustable wheel. The drop wheel can allow the operator to better balance the edger when working in certain environments. The height-adjustable wheel can allow the operator to adjust the height of the edger. Interfaces allowing the operator to make adjustments to the drop wheel or the height-adjustable wheel can be located along a handle of the edger. The handle may be reconfigurable between two or more positions (e.g., angular orientations) to allow the operator to select a suitable configuration for each particular operation being performed. These and other features will be described in greater detail below.

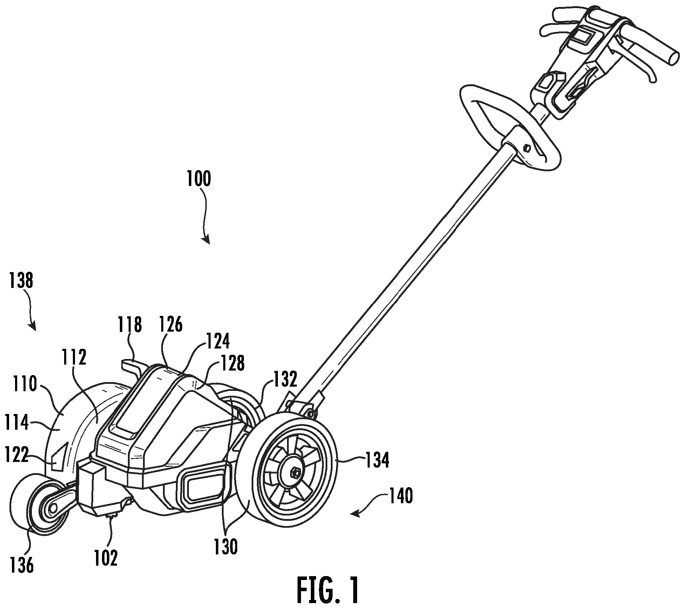

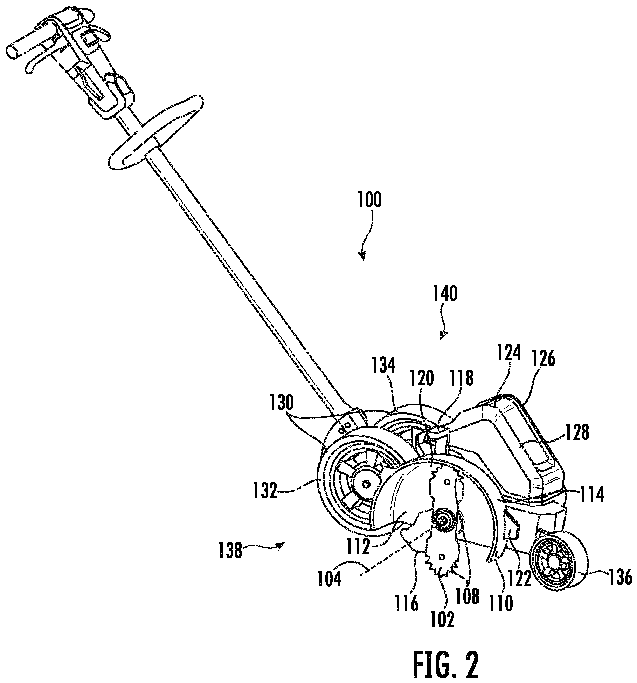

Referring now to the drawings, FIGS. 1 and 2 illustrate a power tool 100 in accordance with an exemplary embodiment of the present disclosure. The exemplary power tool 100 depicted in FIGS. 1 and 2 is an edger including a rotatable edging blade 102. In other embodiments, the power tool 100 may include another type of power tool such as a lawn mower, a snow blower, or the like.

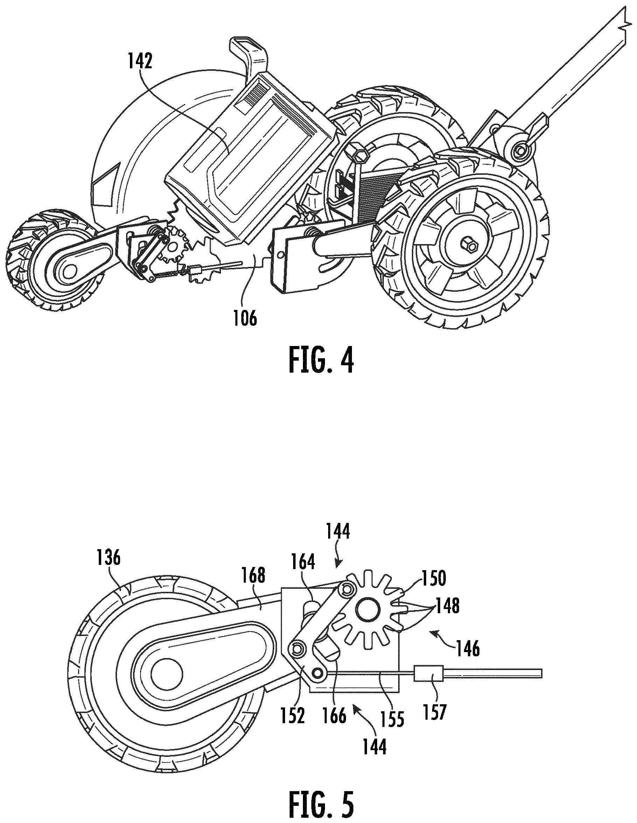

In one or more embodiments, the edging blade 102 may be removably coupled to the power tool 100. The edging blade 102 may be rotatable about an axis 104 and driven by a motor 106 (FIG. 4). As depicted, the edging blade 102 may include a resilient blade having one or more cutting surfaces 108. The cutting surface(s) 108 can include, for example, one or more serrations or teeth having sharpened edges for penetrating into and edging an underlying surface. In an embodiment, the edging blade 102 can have a rectangular, or generally rectangular shape. In certain instances, the edging blade 102 may rotate in a clockwise direction. In other instances, the edging blade 102 may rotate in a counter-clockwise direction. In certain embodiments, the direction of rotation of the edging blade 102 may be adjustable. In other embodiments, the direction of rotation of the edging blade 102 may be limited to only one of clockwise or counter-clockwise rotation.

A guard 110 may extend around at least a portion of a perimeter of the edging blade 102. For instance, in the illustrated embodiment the guard 110 is disposed around an upper side of the edging blade 102. The guard 110 can include a backing 112 and a flange 114 extending from the backing 112 and overhanging the edging blade 102. The flange 114 may protect the operator from kick up of debris being ejected by operation of the edging blade 102. The guard 110 may terminate at a vertical elevation below which the edging blade 102 may penetrate into the underlying surface. In such a manner, the guard 110 does not interfere with edging operations.

An edge guide 116 can extend in a downward direction and guide the edger in a straight line. The edge guide 116 can include a spring loaded, or otherwise biased, mechanism configured to bias the edge guide 116 downward. In the depicted embodiment, the edge guide 116 is pivotable about the axis 104, allowing the edge guide 116 to displace in an upward direction when encountering hard terrain, such as stone pavers, rocks, and the like. In an embodiment, the edge guide 116 may be mounted to the same axle as the edging blade 102. The edge guide 116 may include one or more stops which prevent the edge guide 116 from rotating past one or more prescribed rotational thresholds. That is, for example, the edge guide 116 may be configured to rotate about the axis 104 a maximum rotational distance between a downward-most position and an upward-most position. The edge guide 116 may be removable from the power tool 100.

The edge guide 116 can allow the operator to run the edging blade 102 along hard surfaces, like curbs and driveways. By aligning the edge guide 116 with respect to the hard surface, the operator can position the edging blade 102 proximate to the hard surface without hitting the surface with the edging blade 102.

The power tool 100 can further include an edge guide adjuster 118. The edge guide adjuster 118 can allow for adjustment of a height of the edge guide 116. In the depicted embodiment, the edge guide adjuster 118 includes a lever extending in a generally vertical direction. The edge guide adjuster 118 can be manipulated by the operator to adjust a relative height of the edge guide 116. For instance, when the operator pushes the edge guide adjuster 118 down, the edge guide 116 can move in a downward direction. Conversely, when the operator pulls the edge guide adjuster 118 up, the edge guide 116 can move in an upward direction. In one or more embodiments, the edge guide adjuster 118 may be infinitively adjustable between a minimum height and a maximum height. That is, the edge guide adjuster 118 may not include specific stop locations resulting in a fixed number of vertical positions. Instead, the edge guide adjuster 118 may be adjustable to any location between two adjustment end points. In other embodiments, the edge guide adjuster 118 may be adjustable between a plurality of preset positions. For instance, the edge guide adjuster 118 may be adjustable between at least two positions, such as at least three positions, such as at least four positions, such as at least five positions. In a non-illustrated embodiment, the edge guide adjuster 118 can adjust a height of the edge guide 116 through rotational movement. That is, as the edge guide adjuster 118 is rotated, the relative height of the edge guide 116 may change. Other mechanisms can be utilized for the edge guide adjuster 118. Moreover, in certain instances, the edge guide adjuster 118 may be disposed at a location spaced apart from the edge guide 116. For example, the edge guide adjuster 118 may be disposed along a handle of the power tool 100.

A guard sweep 120 may be disposed at an operable location with respect to the guard 110. In an embodiment, the guard sweep 120 can be disposed between the edging blade 102 and the backing 112 of the guard 110. In a more particular embodiment, the guard sweep 120 may be disposed between the edge guide 116 and the backing 112 of the guard 110.

The guard sweep 120 is configured to move relative to the guard 110 and clear debris that can become caught thereagainst. The guard sweep 120 can rotate about the axis 104 between a forwardmost position and a rearmost position. In certain instances, the guard sweep 120 can be spring biased to a home position (such as illustrated in FIG. 2). The guard sweep 120 can move from the home position in either, or both, the forward direction or the rear direction to remove debris from the guard 110. In certain instances, the guard sweep 120 can include a first portion configured to clean the backing 112 of the guard 110 and a second portion configured to clean the flange 114.

A blade alignment indicator 122 may be disposed along the power tool 100 to permit an operator to discern the relative position of the edging blade 102 with respect to the power tool 100 during use. In such a manner, the operator can align the edging blade 102 during use without having to visually see the edging blade 102. Instead, the operator can view the projected path of the edging blade 102 using the blade alignment indicator 122. While the blade alignment indicator 122 is depicted at a forward location of the guard 110, in other embodiments, the blade alignment indicator 122 may be at a rear or middle location along the guard.

In an embodiment, the blade alignment indicator 122 may include a projection extending from the guard 110. For example, as depicted in FIG. 2, the blade alignment indicator 122 may extend from the backing 112 of the guard 110. In another embodiment, the blade alignment indicator 122 may include a projection extending from the flange 114 of the guard 110. In yet another embodiment, the blade alignment indicator 122 may extend from another portion of the power tool 100. In a non-illustrated embodiment, the blade alignment indicator 122 may include an opening through which the operator can look to see and align the edging blade 102 relative to the underlying surface. In yet another non-illustrated embodiment, the blade alignment indicator 122 may include another visual indicia, such as, for example, a line projected (e.g., from a laser source) from the power tool 100. Use of the blade alignment indicator 122 can reduce the risk of the operator being hit with debris which may occur in traditional edgers that require the operator to visually see the edging blade in order to align the edging blade with the underlying surface.

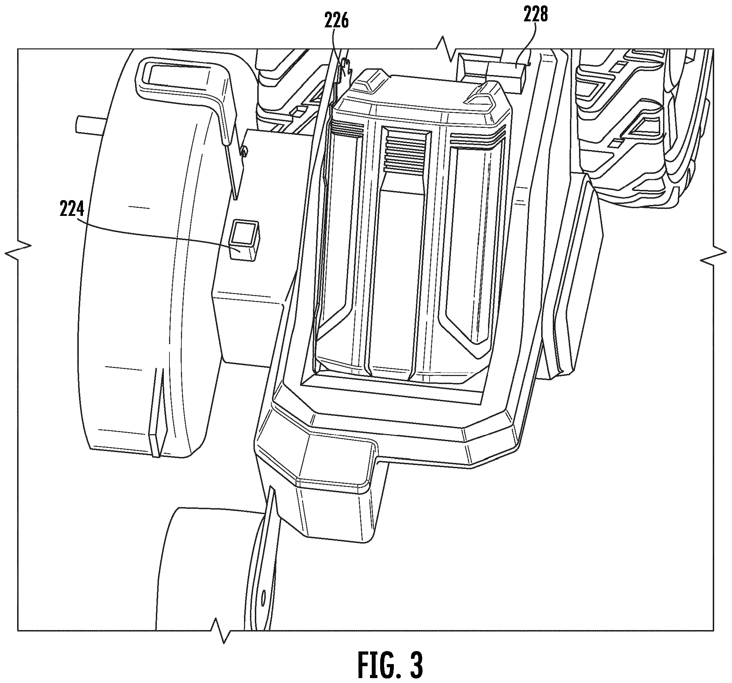

FIG. 3 illustrates an embodiment of the power tool 100 in accordance with an embodiment. In the illustrated embodiment, the power tool 100 includes a blade lock 224 configured to selectively lock the edging blade 102 at a relatively fixed position. When engaged, the blade lock 224 can lock the edging blade 102 so as to prevent the edging blade 102 from rotating. This may be desirable, for example, when removing the edging blade 102 from the power tool 100. When the blade lock 224 is released, i.e., when the blade lock 224 returns to the unlocked state, the edging blade 102 may be permitted to rotate.

In an embodiment, the power tool 100 can include a storage area configured to receive a secondary edging blade 226. The secondary edging blade 226 may be interchangeable with the edging blade 102. In certain instances, the secondary edging blade 226 may be identical to the edging blade 102. In other instances, the secondary edging blade 226 may have one or more different characteristics as compared to the edging blade 102. For instance, the edging blade 102 and secondary edging blade may include different blade types to be used in different applications or within different environments.

Similarly, tooling 228 may be stored on the power tool 100 so that the operator can replace the edging blade 102 with another edging blade or the secondary edging blade 226. The tooling 228 may include a wrench or other tools which the operator needs to perform the blade change operation.

Referring again to FIGS. 1 and 2, the power tool 100 can generally include a housing 124 configured to protect one or more electronic components of the power tool 100. In an embodiment, the housing 124 can include a multi-piece construction. For instance, the housing 124 can include a first portion 126 and a second portion 128. In an embodiment, the first and second portions 126 and 128 can be joined together with one or more sealing elements configured to prevent debris or water contamination within the housing 124.

The power tool 100 can include two or more wheels 130 coupled with the housing 124. In the embodiment depicted in FIGS. 1 and 2, the power tool 100 includes a first wheel 132, a second wheel 134, and a third wheel 136. The first and second wheels 132 and 134 are depicted as having a common size while the third wheel 136 is depicted smaller than the first and second wheels 132 and 134. In another embodiment, the wheels 130 can all have different sizes as compared to one another. In yet another embodiment, the wheels 130 can all share a common size. In yet another embodiment, the first and third wheels 132 and 136 can share a common size. In yet another embodiment, the second and third wheels 134 and 136 can share a common size.

The first wheel 132 is depicted on a first side 138 of the housing 124. The second wheel 134 is depicted on a second side 140 of the housing 124. The third wheel 136 is depicted on the first side 138 of the housing 124. These relative positions may be changed without departing from the scope of the invention.

In an embodiment, the first wheel 132 can be a drive wheel. The drive wheel can be selectively driven by a motor (not illustrated). In another embodiment, the first wheel 132 can be passive such that the first wheel 132 rotates when the power tool 100 is pushed or pulled by the operator.

The second wheel 134 can be a drop wheel. As described in greater detail below, the drop wheel can be selectively adjustable between a plurality of positions corresponding with different vertical heights.

The third wheel 136 can be a height-adjustable wheel configured to be adjusted between a plurality of different heights. As described in greater detail below, the height of the edging blade 102, and the resulting depth of the edged cut, can be adjusted by changing a relative height of the height-adjustable wheel. While the height-adjustable wheel is illustrated on a particular side of the power tool 100, in accordance with another embodiment, the height-adjustable wheel can be disposed on any side of the power tool 100. By way of example, the second wheel 134 and the third wheel 136 can be disposed on a same side of the power tool 100.

FIG. 4 illustrates an embodiment of the power tool 100 with the housing 124 removed. As depicted, in one or more embodiments, the power tool 100 can include a remote power source, e.g., a battery 142, which can provide power to the motor 106. In some embodiments, the battery 142 may be at least partially, such as fully disposed within the housing 124. In other embodiments, the battery 142 can be disposed at least partially external to the housing 124. The battery 142 may be removable for charging or charged while connected to the power tool 100. For instance, the power tool 100 can include a port (not illustrated) configured to receive a cable connected to an external power supply, such as a wall outlet.

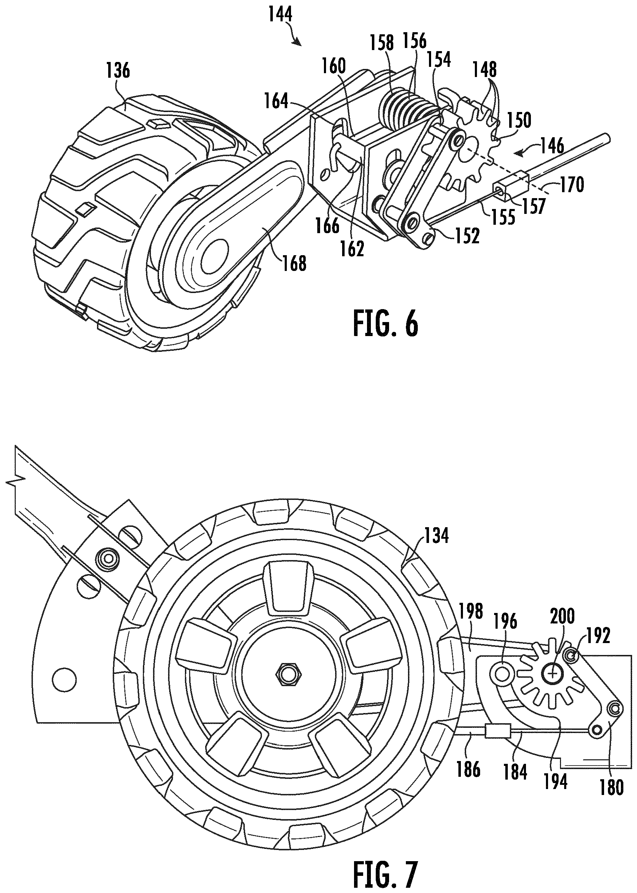

FIGS. 5 and 6 illustrate views of the height-adjustable wheel including the third wheel 136 and an adjustment assembly 144 configured to adjust the height of the third wheel 136 between a plurality of different vertical positions. The adjustment assembly 144 can generally include a stop mechanism 146 defining a plurality of stop positions 148 each corresponding with a different relative position of the third wheel 136. The stop mechanism 146 can include a rotatable element 150 coupled to the third wheel 136. A linkage 152 having an engagement feature 154 can be selectively moved between an engaged position (as depicted), where the rotatable element 150 is held in a relatively fixed orientation, and a disengaged position (not illustrated), where the rotatable element 150 is at least partially free to rotate. A cable 155 can be coupled to the linkage 152 such that an operator can disengage the engagement feature 154 from the stop positions 148 by pulling on the cable 155 and pivoting the linkage 152. The cable 155 can extend to a handle of the power tool 100 through a cable passageway 157. In an embodiment disclosed but not claimed, the linkage 152 can be coupled with a motor, e.g., a servo motor, to selectively move the engagement feature 154 between the engaged and disengaged positions.

The adjustment assembly 144 can further include a spring 156 configured to bias the third wheel 136 in a downward direction. In a particular embodiment, the spring 156 can be a torsion spring including a plurality of coils 158 and one or more legs 160 extending therefrom. A guide member 162 coupled with the third wheel 136 can be biased in a downward direction by the leg 160 of the spring 156 such that when the engagement feature 154 is released from the stop positions 148, the third wheel 136 moves in the downward direction under a biasing load provided at least in part by the spring 156. The guide member 162 may be configured to move in an arc-shaped path between a first end position 164 and a second end position 166. The first end position 164 can correspond with a maximum vertical elevation of the third wheel 136 while the second end position 166 can correspond with a minimum vertical elevation of the drop wheel. When the guide member 162 is disposed at the first end position 164, the edging blade 102 is capable of maximum surface penetration. Conversely, when the guide member 162 is disposed at the second end position 166, the edging blade 102 is configured to provide minimal surface penetration.

When the operator engages the cable 155, e.g., when the operator pulls on the cable 155 from a height-adjustable user interface disposed on the handle (described in greater detail hereinafter), the linkage 152 can move, e.g., pivot, from the engaged position to the disengaged position, thereby allowing the rotatable element 150 to rotate. The spring 156 can then move the guide member 162, causing a swing arm 168 coupled between the rotatable element 150 and the third wheel 136 to rotate about a pivot axis 170. As the swing arm 168 rotates, the height of the third wheel 136 changes.

To raise the height of the edging blade 102, the operator can allow the third wheel 136 to be biased by the spring 156 in a downward direction. In certain instances, the spring 156 can have a sufficient spring rate so as to bias the third wheel 136 downward. In other instances, the operator may lift the third wheel 136 off the ground, e.g., by pivoting the power tool 100 on the first and second wheels 132 and 134. The operator can release the height-adjustable user interface such that the engagement feature 154 of the linkage 152 interfaces with a stop position 148 of the rotatable element 150. Releasing of the height-adjustable user interface may be performed after the third wheel 136 reaches the desired height.

Conversely, to lower the height of the edging blade 102, the operator can move the third wheel 136 in a direction so as to coil the spring 156. That is, the operator may push down on the power tool 100 or otherwise provide force against the third wheel 136, thereby causing the guide member 162 to move towards the second position 164 and allowing the third wheel 136 to move upward. In certain instances, the operator may be required to overcome the spring rate of the spring 156. That is, the spring 156 may provide more rotational resistance to the guide member 162 than the force thereagainst as provided by the weight of the power tool 100. In other instances, simply disengaging the engagement feature 154 of the linkage 152 from the stop positions 148 may result in the third wheel 136 pivoting such that the edging blade 102 is lowered.

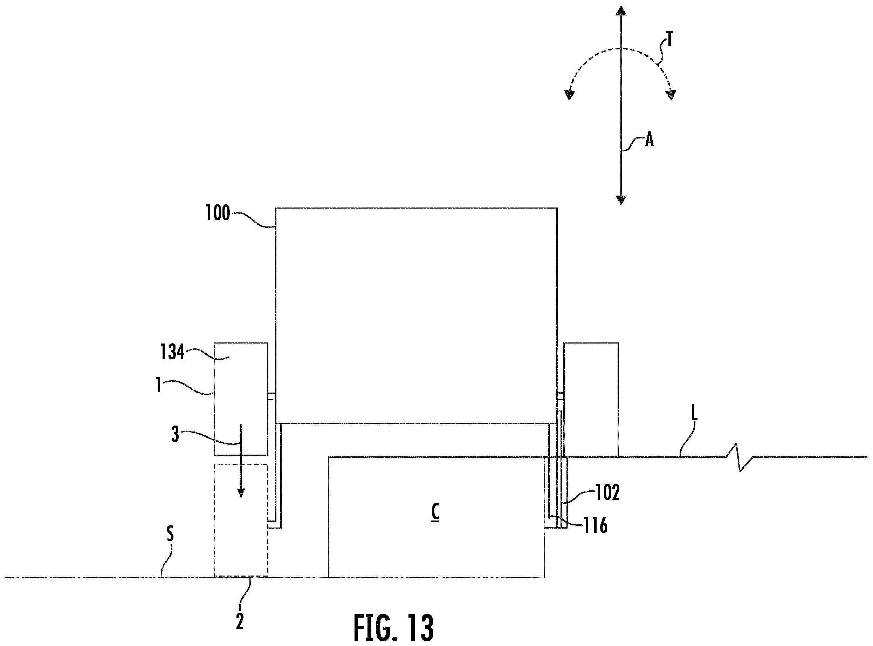

As illustrated via a schematic view in FIG. 13, when edging a lawn L adjacent to a curb C, the edge guide 116 can ride along the curb C to guide the edging blade 102 and create a close-fit cut. However, in certain instances, such as that depicted in FIG. 13, one or more wheels of the power tool 100 can be raised from the neighboring ground surface S (in the exemplary schematic, the ground surface S is a neighboring street). The resulting lateral imbalance can cause the power tool 100 to cant (tilt) T from a vertical axis A. This, in turn, may create a dangerous situation for nearby bystanders and the operator. Additionally, this may affect performance of the power tool 100 and the visual appearance of the edged cut. Accordingly, use of a drop wheel may be desirable. The drop wheel (e.g., the suspended second wheel 134) can move from a first position 1 suspended in the air, to a second position 2 in contact with the underlying ground surface S. Movement from the first position 1 to the second position 2 can occur along direction 3. The drop wheel can be biased to the second position 2 and selectively dropped so as to contact the ground surface S.

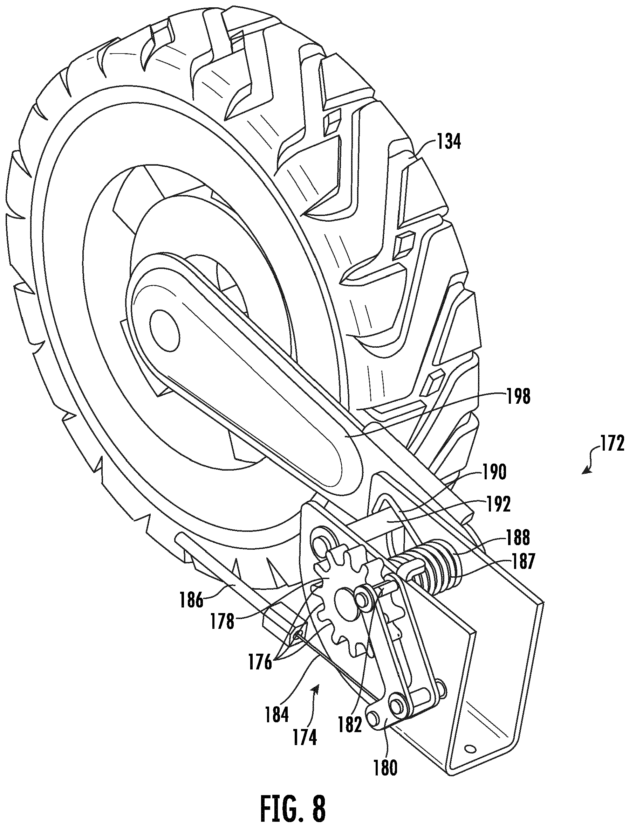

FIGS. 7 and 8 illustrate views of the drop wheel including the second wheel 134 and an adjustment assembly 172 configured to adjust the height of the second wheel 134 between a plurality of different vertical positions. Unlike the third wheel 136 and the adjustment assembly 144 which are used to adjust a vertical position of the edging blade 102, the second wheel 134 and the adjustment assembly 172 can be part of the drop wheel. The drop wheel may allow the operator to support the power tool 100 when riding along curbs or other drop-offs where the second wheel 134 is suspended in the air. To compensate for these situations, the operator may selectively adjust the height of the second wheel 134 to contact the underlying surface. As described below, in accordance with certain embodiments, the adjustment assembly 172 can operate similar to the aforementioned adjustment assembly 144. However, in other embodiments, the adjustment assembly 172 can include one or more different operating protocols or elements as compared to the adjustment assembly 144.

In an embodiment the adjustment assembly 172 generally includes a stop mechanism 174 defining a plurality of stop positions 176 each corresponding with a different relative vertical position of the second wheel 134. The stop mechanism 174 includes a rotatable element 178 coupled to the second wheel 134. A linkage 180 having an engagement feature 182 can be selectively moved between an engaged position (as depicted), where the rotatable element 178 is held in a relatively fixed orientation, and a disengaged position (not illustrated), where the rotatable element 178 is at least partially free to rotate. A cable 184 is coupled to the linkage 180 such that an operator can disengage the engagement feature 182 from the stop positions 176 by pulling on the cable 184. The cable 184 extends to a handle of the power tool 100 through a cable passageway 186. In an embodiment disclosed but not claimed, the linkage 180 can be coupled with a motor, e.g., a servo motor, to selectively move the engagement feature 182 between the engaged and disengaged positions.

The adjustment assembly 172 further includes a spring 187 configured to bias the second wheel 134 in a downward direction. In a particular embodiment, the spring 187 can be a torsion spring including a plurality of coils 188 and one or more legs 190 extending therefrom. The plurality of coils 188 can define a central axis which may extend parallel, or generally parallel, with a rotatable axis of the stop mechanism 174.

A guide member 192 coupled with the second wheel 134 can be biased in a downward direction by the leg 190 of the spring 187 such that when the engagement feature 182 is released from the stop positions 176, the second wheel 134 moves in the downward direction. The guide member 192 may be configured to move in an arc-shaped path between a first end position 194 and a second end position 196. The first end position 194 can correspond with a maximum vertical elevation of the second wheel 134 while the second end position 196 can correspond with a minimum vertical elevation of the second wheel 134.

When the operator engages the cable 184, e.g., when the operator pulls on the cable 184 from a height-adjustable user interface disposed on the handle (described in greater detail hereinafter), the linkage 180 can move, e.g., rotate, from an engaged position to a disengaged position, thereby allowing the rotatable element 178 to rotate. The spring 187 can then move the guide member 192, causing a swing arm 198 coupled between the rotatable element 178 and the second wheel 134 to rotate about a pivot axis 200. As the swing arm 198 rotates, the height of the second wheel 134 changes.

To deploy the drop wheel (i.e., to lower the second wheel 134), the operator can allow the second wheel 134 to be biased by the spring 187 in a downward direction. In certain instances, the second wheel 134 may displace towards and front end of the power tool 100 when the second wheel 134 is repositioned from the maximum vertical elevation to the minimum vertical elevation. After the second wheel 134 reaches the underlying surface, the operator can release the user interface such that the engagement feature 182 of the linkage 180 interfaces with a stop position 176 of the rotatable element 178.

Conversely, to retract the drop wheel (i.e., to raise the second wheel 134), the operator can move the second wheel 134 in a direction so as to coil the spring 187. That is, the operator may push down on the power tool 100 or otherwise provide force against the second wheel 134, thereby causing the guide member 192 to move towards the second position 196 and allowing the second wheel 134 to move upward. In certain instances, the operator may be required to overcome the spring rate of the spring 187. That is, the spring 187 may provide more rotational force to the guide member 192 than the force thereagainst as provided by the weight of the power tool 100. In other instances, simply disengaging the engagement feature 182 of the linkage 180 from the stop positions 176 may result in the second wheel 136 pivoting to the retracted position.

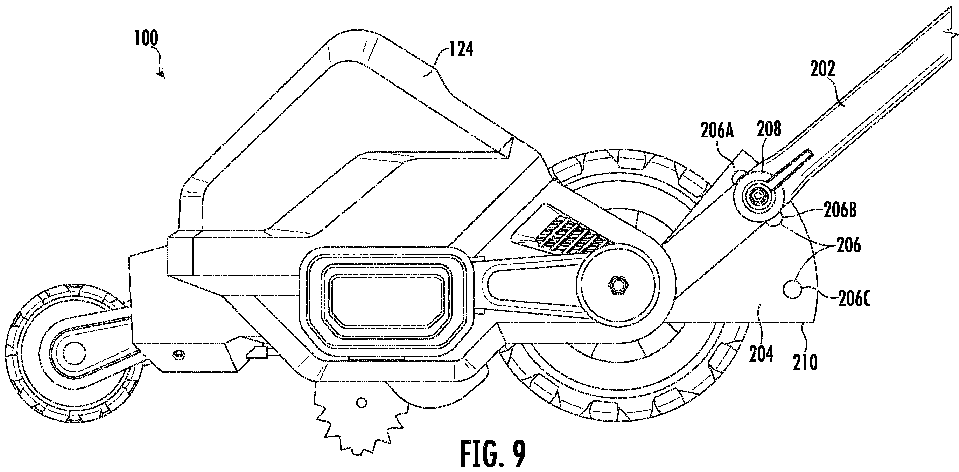

FIG. 9 illustrates a partial side view of the power tool 100 in accordance with an embodiment. As illustrated, the power tool 100 can include a boom 202 extending from the housing 124 to a handle of the power tool 100. In one or more embodiments, the boom 202 may be dynamically coupled to the housing 124. As used herein, dynamic coupling between the boom 202 and the housing 124 may refer to adjustable coupling whereby the boom 202 is at least partially reconfigurable (e.g., repositionable) between a plurality of positions. In the illustrated embodiment, the boom 202 may be adjustable between a plurality of orientations. For example, the boom 202 may be pivoted about an axis (not shown) between two or more positions. The two or more positions may each correspond with different operating positions, each affecting a different relative location of the handle of the power tool 100 with respect to the housing 124.

A tilt plate 204 may define a plurality of stop locations 206 each corresponding with a different pivotal angle of the boom 202. For instance, the stop locations 206 can include a first stop location 206A, a second stop location 206B, and a third stop location 206C. More or less stop locations 206 may be included along the tilt plate 204 without departing from the scope of the disclosure.

A release interface 208 can be configured to selectively engage with one or more of the stop locations 206 to selectively secure the boom 202 at a relatively fixed angle with respect to the housing 124. For instance, when the release interface 208 is coupled with the first stop location 206A, the boom 202 may extend to a maximum secured height, whereas when the release interface 208 is coupled with the third stop location 206C, the boom 202 may extend to a minimum secured height. The boom 202 may be pivotally adjustable beyond either, or both, the first and third stop locations 206A or 206C, however, in some embodiments, the power tool 100 is only operable when the boom 202 is secured at a relatively fixed location by engaging the release interface 208 with one or more of the stop location 206.

The exemplary release interface 208 illustrated in FIG. 9 includes a rotatable element and one or more pins which can be selectively interfaced with one or more of the stop locations 206 when the rotatable element is disposed at a prescribed orientation. In certain instances, the rotatable element can define structure which pulls the one or more pins from the stop locations 206 when the rotatable element is rotated. For instance, the rotatable element can define a curved inner surface disposed adjacent to the boom 202 which, when rotated, moves the rotatable element towards or away from the boom 202. As the rotatable element moves away from the boom 202, the one or more pins can be pulled from the stop location(s) 206. A biasing element, such as a spring, can bias the rotatable element in a direction towards the boom 202 such that the one or more pins remain interfaced with the stop location(s) 206 when the rotatable element is in a locked position.

By way of non-limiting example, the tilt plate 204 may include a resilient plate extending from the housing 124. In certain instances, the tilt plate 204 may be directly coupled to the housing 124. In other instances, the tilt plate 204 may be coupled to the housing 124 through framework of the power tool 100. The tilt plate 204 can define delimiting features (e.g., flange 210) configured to prevent the operator from moving the boom 202 beyond a prescribed threshold. In certain instances, the boom 202 may be moveable to a stored position whereby the boom 202 is collapsed for storage. In certain instances, the stored position of the boom 202 may correspond with a location of one or more of the delimiting feature(s). For example, in the illustrated embodiment, the boom 202 may be pivoted towards the flange 210 and rest thereupon such that the boom 202 is parallel, or generally parallel, with the flange 210. This configuration may be particularly useful for hanging the power tool 100 when storing. Alternatively, or in addition to the flange 210, the power tool 100 may include a delimiting feature which permits the boom 202 to rotate to a forward stored position whereby the boom 202 is pivoted forward to a stored position. The forward stored position may be particularly suitable for storage when the power tool 100 is kept on the ground and space around the power tool 100 is limited.

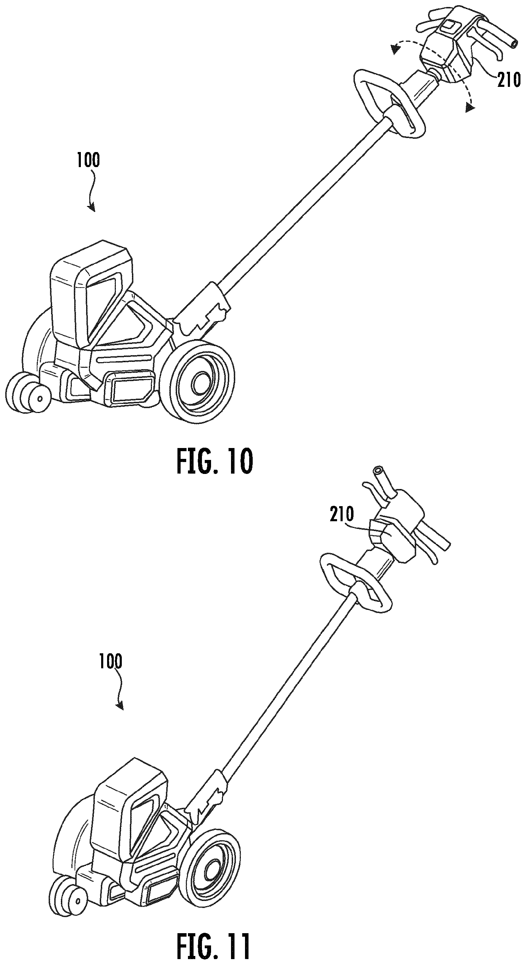

When using the power tool 100, there may be instances where the operator wants to rotate the handle from one orientation to another. FIGS. 10 and 11 illustrate the power tool 100 with a handle 210 of the power tool 100 in two different orientations. In the embodiment depicted in FIG. 10, the handle 210 is in a horizontal orientation. In the embodiment depicted in FIG. 11, the handle 210 is in a vertical orientation. The horizontal and vertical orientations may be separated by an angular displacement of the handle 210. The angular displacement in the depicted embodiment is approximately 90 degrees. In another embodiment, the angular displacement between the horizontal and vertical orientations may be less than 90 degrees. In yet another embodiment, the angular displacement between the horizontal and vertical orientations may be greater than 90 degrees. In an embodiment, the angular displacement between the horizontal and vertical orientations may be at least 10 degrees, such as at least 15 degrees, such as at least 20 degrees, such as at least 25 degrees, such as at least 30 degrees, such as at least 40 degrees, such as at least 60 degrees, such as at least 80 degrees. In another embodiment, the angular displacement between the horizontal and vertical orientations may be less than 360 degrees, such as no greater than 270 degrees, such as no greater than 180 degrees, such as no greater than 150 degrees, such as no greater than 120 degrees.

By way of non-limiting example, the operator may utilize the power tool 100 with the handle 210 in the horizontal orientation when standing behind the power tool 100. In this regard, the operator can position both hands along the handle 210 while standing at a rearmost position. When performing operations in certain environments, like when edging a yard near a curb or fence, it may be desirable to stand next to the power tool 100, i.e., displaced from the rearmost position to an at least partially lateral position. This may afford the operator more room and a better position when using the power tool 100.

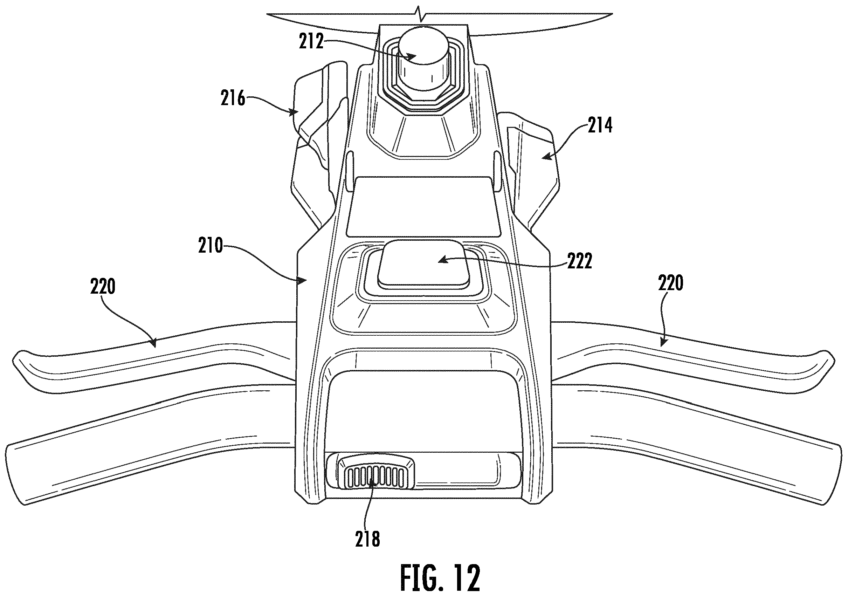

The handle 210 may be moveable relative to the boom 202 when moving between the horizontal and vertical orientations. Referring to FIG. 12, the power tool 100 may include a switch 212 configured to selectively allow for reorientation of the handle 210 with respect to the boom 202. The switch 212 may be operable between a locked state, whereby the handle 210 is relatively fixed with respect to the boom 202, and an unlocked state, whereby the handle 210 can be moved with respect to the boom 202. The switch 212 can include a depressible button, a pullable engagement, a rotatable dial, a pivotal latch, or another similar mechanism which selectively controls engagement between the handle 210 and the boom 202. The switch 212 may be disposed on the handle 210, allowing the operator to unlock and reorient the handle 210 without having to move from an operating position with respect thereto.

The handle 210 further includes a user interface 214 configured to control the drop wheel (e.g., the second wheel 134) and a height-adjustment user interface 216 configured to control the height-adjustable wheel (e.g., the third wheel 136). In the illustrated embodiment, the user interface 214 and height-adjustment user interface 216 include rotatable paddles. In other embodiments, the user interface 214 and height-adjustment user interface 216 can include other user engageable elements, such as one or more rotatable dials, depressible buttons, pullable engagements, pivotal latches, or the like.

A speed adjuster 218 may be disposed along the handle 210 and allow the operator to adjust a relative speed of the edging blade 102. Alternatively, or in addition, the speed adjuster 218 may permit the operator to adjust the speed of the driven wheel in embodiments including such driven wheels. By way of non-limiting example, the speed adjuster 218 may include a slidable interface which permits the operator to control a relative speed of a motor coupled with the edging blade 102 or driven wheel.

One or more triggers 220 may be disposed along the handle 210 to prevent the power tool 100 from operating when the operator is not in a controlling position relative thereto. That is, for example, in certain instances the power tool 100 may not operate when the one or more triggers 220 are not depressed. In such a manner, the power tool 100 is safer for the operator.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art.

## Claims

1. A power tool (100) comprising:
a drop wheel (134) moveable in a vertical direction about a pivot axis (200);
a spring (187) rotatably biasing the drop wheel about the pivot axis;
a stop mechanism (174) defining a plurality of stop positions (176) each corresponding with a different relative position of the drop wheel; and
a user interface (214) configured to selectively disengage the stop mechanism to permit the drop wheel to rotate about the pivot axis until the drop wheel contacts an underlying surface below the power tool, wherein the user interface is disposed at a handle (210) of the power tool;
wherein the stop mechanism comprises:
a rotatable element (178) coupled to the drop wheel, the rotatable element defining the plurality of stop positions; and
a linkage (180) having an engagement feature (182) configured to engage with at least one of the plurality of stop positions;
**characterized in that**
a cable (184) extends between and operatively coupling the linkage to the user interface.

2. The power tool of claim 1, wherein the rotatable element is coupled to a swing arm (198), and wherein the swing arm is coupled to the drop wheel such that rotation of the rotatable element causes a vertical elevation of the drop wheel to change.

3. The power tool of claim 2, wherein the spring comprises a torsion spring having a leg (190) biasing a guide member (192) coupled to the swing arm, the guide member being displaceable within an arc-shaped path between a first end position (194) and a second end position (196), the first end position corresponding with a maximum vertical elevation of the drop wheel and the second end position corresponding with a minimum vertical elevation of the drop wheel.

4. The power tool of any of the preceding claims, wherein the spring comprises a plurality of coils (188) defining a central axis extending generally parallel with a rotatable axis of the stop mechanism.

5. The power tool of any of the preceding claims, wherein the power tool comprises an edger having a rotatable blade configured to rotate about an axis generally parallel with a rotatable axis of the drop wheel.

6. The power tool of any of the preceding claims, wherein the drop wheel is repositionable between a maximum vertical elevation and a minimum vertical elevation, wherein the power tool defines a front end and a rear end, and wherein the drop wheel is configured to displace towards the front end of the power tool when repositioned from the maximum vertical elevation to the minimum vertical elevation.

7. The power tool of any of the preceding claims, wherein the power tool further comprises a height adjustable wheel, the height adjustable wheel being disposed on an opposite side of the power tool as compared to the drop wheel, wherein the height adjustable wheel is adjustable through a height-adjustable user interface (216) disposed on the handle of the power tool.

## Patentansprüche

1. Elektrowerkzeug (100), umfassend:
ein Fallrad (134), das in vertikaler Richtung um eine Schwenkachse (200) beweglich ist;
eine Feder (187), die das Fallrad drehbar um die Schwenkachse vorspannt;
einen Stoppmechanismus (174), der eine Vielzahl von Stopppositionen (176) definiert, die jeweils einer anderen relativen Position des Fallrads entsprechen; und
eine Benutzerschnittstelle (214), die dazu konfiguriert ist, den Stoppmechanismus selektiv zu lösen, um eine Drehung des Fallrads um die Schwenkachse zu ermöglichen, bis das Fallrad eine darunterliegende Oberfläche unter dem Elektrowerkzeug berührt, wobei die Benutzerschnittstelle an einem Griff (210) des Elektrowerkzeugs angeordnet ist;
wobei der Stoppmechanismus umfasst:
ein drehbares Element (178), das mit dem Fallrad gekoppelt ist, wobei das drehbare Element die Vielzahl von Stopppositionen definiert; und
eine Verbindung (180) mit einer Eingriffsfunktion (182), die zum Eingreifen in mindestens eine der Vielzahl von Stopppositionen konfiguriert ist;
**dadurch gekennzeichnet, dass**
ein Kabel (184) zwischen der Verbindung und der Benutzerschnittstelle verläuft und diese funktional mit dieser koppelt.

2. Elektrowerkzeug nach Anspruch 1, wobei das drehbare Element mit einem Schwingarm (198) gekoppelt ist, und wobei der Schwingarm mit dem Fallrad gekoppelt ist, so dass eine Drehung des drehbaren Elements eine Änderung der vertikalen Höhe des Fallrads bewirkt.

3. Elektrowerkzeug nach Anspruch 2, wobei die Feder eine Torsionsfeder mit einem Schenkel (190) umfasst, der ein mit dem Schwingarm verbundenes Führungselement (192) vorspannt, wobei das Führungselement innerhalb eines bogenförmigen Pfads zwischen einer ersten Endposition (194) und einer zweiten Endposition (196) verschiebbar ist, wobei die erste Endposition einer maximalen vertikalen Höhe des Fallrads und die zweite Endposition einer minimalen vertikalen Höhe des Fallrads entspricht.

4. Elektrowerkzeug nach einem der vorstehenden Ansprüche, wobei die Feder eine Vielzahl von Windungen (188) umfasst, die eine Mittelachse definieren, die im Wesentlichen parallel zu einer Drehachse des Stoppmechanismus verläuft.

5. Elektrowerkzeug nach einem der vorstehenden Ansprüche, wobei das Elektrowerkzeug einen Kantenschneider mit einer drehbaren Klinge umfasst, die so konfiguriert ist, dass sie sich um eine Achse dreht, die im Allgemeinen parallel zu einer Drehachse des Fallrads verläuft.

6. Elektrowerkzeug nach einem der vorstehenden Ansprüche, wobei das Fallrad zwischen einer maximalen vertikalen Höhe und einer minimalen vertikalen Höhe neu positioniert werden kann, wobei das Elektrowerkzeug ein vorderes und ein hinteres Ende aufweist, und wobei das Fallrad so konfiguriert ist, dass es sich zum vorderen Ende des Elektrowerkzeugs hin verlagert, wenn es von der maximalen vertikalen Höhe auf die minimale vertikale Höhe neu positioniert wird.

7. Elektrowerkzeug nach einem der vorstehenden Ansprüche, wobei das Elektrowerkzeug ferner ein höhenverstellbares Rad umfasst, wobei das höhenverstellbare Rad im Vergleich zum Fallrad auf der gegenüberliegenden Seite des Elektrowerkzeugs angeordnet ist, wobei das höhenverstellbare Rad durch eine höhenverstellbare Benutzerschnittstelle (216) verstellbar ist, die am Griff des Elektrowerkzeugs angeordnet ist.

## Revendications

1. Outil électrique (100) comprenant :
une roue de chute (134) mobile dans une direction verticale autour d'un axe de pivotement (200) ;
un ressort (187) sollicitant de manière rotative la roue de chute autour de l'axe de pivotement ;
un mécanisme d'arrêt (174) définissant une pluralité de positions d'arrêt (176) correspondant chacune à une position relative différente de la roue de chute ; et
une interface utilisateur (214) conçue pour désaccoupler sélectivement le mécanisme d'arrêt afin de permettre à la roue de chute de tourner autour de l'axe de pivotement jusqu'à ce que la roue de chute entre en contact avec une surface sous-jacente sous l'outil électrique, dans lequel l'interface utilisateur est disposée au niveau d'une poignée (210) de l'outil électrique ;
dans lequel le mécanisme d'arrêt comprend :
un élément rotatif (178) accouplé à la roue de chute, l'élément rotatif définissant la pluralité de positions d'arrêt ; et
une liaison (180) ayant une caractéristique de mise en prise (182) conçue pour venir en prise dans au moins l'une de la pluralité de positions d'arrêt ;
**caractérisé en ce que**
un câble (184) s'étend entre la liaison et l'interface utilisateur et les relie de manière opérationnelle.

2. Outil électrique selon la revendication 1, dans lequel l'élément rotatif est accouplé à un bras oscillant (198), et dans lequel le bras oscillant est accouplé à la roue de chute de telle sorte que la rotation de l'élément rotatif entraîne une modification d'une élévation verticale de la roue de chute.

3. Outil électrique selon la revendication 2, dans lequel le ressort comprend un ressort de torsion ayant une patte (190) sollicitant un organe de guidage (192) accouplé au bras oscillant, l'organe de guidage pouvant être déplacé à l'intérieur d'une trajectoire en forme d'arc entre une première position finale (194) et une seconde position finale (196), la première position finale correspondant à une élévation verticale maximale de la roue de chute et la seconde position finale correspondant à une élévation verticale minimale de la roue de chute.

4. Outil électrique selon l'une quelconque des revendications précédentes, dans lequel le ressort comprend une pluralité de bobines (188) définissant un axe central s'étendant généralement de manière parallèle à un axe rotatif du mécanisme d'arrêt.

5. Outil électrique selon l'une quelconque des revendications précédentes, dans lequel l'outil électrique comprend un coupe-bordure ayant une lame rotative conçue pour tourner autour d'un axe généralement parallèle à l'axe rotatif de la roue de chute.

6. Outil électrique selon l'une quelconque des revendications précédentes, dans lequel la roue de chute peut être repositionnée entre une élévation verticale maximale et une élévation verticale minimale, dans lequel l'outil électrique définit une extrémité avant et une extrémité arrière, et dans lequel la roue de chute est conçue pour se déplacer vers l'extrémité avant de l'outil électrique lorsqu'elle est repositionnée de l'élévation verticale maximale à l'élévation verticale minimale.

7. Outil électrique selon l'une quelconque des revendications précédentes, dans lequel l'outil électrique comprend en outre une roue ajustable en hauteur, la roue ajustable en hauteur étant disposée sur un côté opposé de l'outil électrique par rapport à la roue de chute, dans lequel la roue ajustable en hauteur est ajustable par le biais d'une interface utilisateur ajustable en hauteur (216) disposée sur la poignée de l'outil électrique.
